(19) Europäisches Patentamt
European Patent Office
Office européen des brevets

(11) **EP 3 578 618 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **19182794.8**

(22) Anmeldetag: **05.12.2013**

(51) Internationale Patentklassifikation (IPC):
**C09J 7/22** (2018.01)   **C09J 7/25** (2018.01)
**C09J 7/38** (2018.01)   **C08K 5/01** (2006.01)

(52) Gemeinsame Patentklassifikation (CPC):
**C09J 7/22; C09J 7/25; C09J 7/38;** C08K 5/01;
C09J 2301/124; C09J 2301/308; C09J 2301/408;
C09J 2453/00; C09J 2475/006

(54) **WIEDERABLÖSBARER HAFTKLEBESTREIFEN**

DETACHABLE ADHESIVE STRIP

BANDE ADHÉSIVE REPOSITIONNABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2012 DE 102012223670**

(43) Veröffentlichungstag der Anmeldung:
**11.12.2019 Patentblatt 2019/50**

(62) Dokumentnummer(n) der früheren Anmeldung(en) nach Art. 76 EPÜ:
**13799324.2 / 2 935 498**

(73) Patentinhaber: **tesa SE**
**22848 Norderstedt (DE)**

(72) Erfinder:
• **KRAWINKEL, Thorsten**
**22457 Hamburg (DE)**
• **SCHERF, Lesmona**
**20253 Hamburg (DE)**
• **PETERSEN, Anika**
**24598 Heidmühlen (DE)**
• **DOLLASE, Thilo**
**22397 Hamburg (DE)**

(74) Vertreter: **tesa SE**
**Hugo-Kirchberg-Straße 1**
**22848 Norderstedt (DE)**

(56) Entgegenhaltungen:
**WO-A1-00/13888**    **WO-A1-92/11333**
**WO-A2-02/072162**    **DE-A1-102007 034 474**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen reißfesten Haftklebestreifen auf der Basis von Styrolblockcopolymeren, gemäß Anspruch 1, welcher zur Schaffung einer durch dehnende Verstreckung ir Richtung der Verklebungsebene wieder lösbare Verbindung eingesetzt werden kann.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als strippfähige Selbstklebebänder bezeichnet.

Eingesetzt werden solche strippfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 C1, DE 195 11 288 C1, US 5,507,464 B1, US 5,672,402 B1 und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 A1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Bevorzugte Einsatzgebiete vorgenannter strippfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Für den Einsatz im Wohn- und Bürobereich werden im Allgemeinen recht dicke Produkte von über 400 $\mu$m eingesetzt.

In der Consumer-Elektronik-Industrie - wie zum Beispiel bei der Herstellung von Mobiltelefonen, Digitalkameras oder Laptops - wird der Wunsch nach einer Möglichkeit, die einzelnen Bauteile nach der Nutzung bei der Entsorgung zu trennen, immer größer. Dann können einige Bauteile wiederverwendet oder aufbereitet werden. Oder es ist zumindest eine getrennte Entsorgung ermöglicht. Daher sind wiederlösbare Klebeverbindungen in dieser Industrie von großem Interesse. Insbesondere Klebebänder, die eine hohe Halteleistung besitzen und auf Wunsch leicht entfernt werden können, bilden hier eine sinnvolle Alternative zu Klebestreifen, die zum Ablösen erst vorbehandelt werden müssen, indem sie zum Beispiel erhitzt werden.

Im Bereich der Consumer-Elektronik sind Klebestreifen bevorzugt, die möglichst dünn sind, da die Endgeräte möglichst dünn sein und daher auch alle einzelnen Komponenten wenig Platz beanspruchen sollen.

Beim Einsatz von sehr dünnen strippfähigen Klebestreifen, die ohne Träger auskommen, kommt es vermehrt zu Reißern (siehe DE 33 31 016 C2). Wenn die Klebestreifen reißen, ist ein Ablösen in der Regel allerdings nicht mehr möglich, weil der Rest des Klebestreifens in die Klebefuge zurückschnellt und somit kein Anfasser zur Verfügung steht.

Die WO 92/11333 A1 beschreibt ein strippfähiges Klebeband, welches als Träger eine hochverstreckbare Folie nutzt, die nach Verstreckung ein Rückstellvermögen von <50 % aufweist und somit nicht kautschukelastisch ist.

Elastische Trägerschichten werden zum Beispiel in der DE 197 08 366 A1 oder der DE 27 28 346 A1 offenbart. In beiden Fällen besteht die Trägerschicht aus einem ähnlichen Material wie die Klebschichten, bevorzugt aus Styrolblockcopolymeren. Die Ähnlichkeit von Trägerschicht und Klebeschichten hat, wie es auch schon gelegentlich in den Schriften beschrieben ist, den Nachteil, dass die eingesetzten Harze leicht auch in die Trägerschicht wandern können. Deshalb ist es erforderlich, in dem Träger und in den klebenden Außenschichten ähnliche oder dieselben Harze einzusetzen oder eine Trennschicht zu integrieren. Durch die Harzwanderung kann es nämlich insbesondere nach längerer Zeit zu einer Verarmung der Harze in der Klebschicht kommen, wodurch diese weniger klebstark ist oder sogar gar nicht mehr haftklebrig erscheint.

WO 92/11332 A1 beschreibt einen durch Ziehen in der Verklebungsebene wiederablösbaren Klebfolienstreifen, für welchen als Träger eine hochverstreckbare, im Wesentlichen nicht rückstellende Folie genutzt werden kann. Als Klebmassen kommen ausschließlich UV-vernetzte Acrylatcopolymere zum Einsatz, mit denen nicht die hohen Verklebungsfestigkeiten erreicht werden können und die weniger stark an Klebkraft während der Dehnung verlieren als dieses zum Beispiel bei Klebmassen auf Vinylaromatenblockcopolymerbasis der Fall ist.

Weitere Veröffentlichungen wie die WO 2010/141248 A1 beschreiben Systeme mit Polyisobutylenhaftklebmassen, die ebenfalls eine geringe Klebkraft aufweisen.

Ein strippfähiger Klebfolienstreifen mit einem geschäumten, nicht haftklebrigen Folienträger wird in WO 95/06691 A1, DE 196 49 727 A1, DE 196 49 728 A1, DE 196 49 729 A1 und DE 198 20 858 A1 beschrieben. Durch den Schaumstoffzwischenträger ist aber eine geringe Dicke des Klebfolienstreifens von unter 200 $\mu$m nicht möglich.

Die WO 00/13888 A1 beschreibt eine stanzbare und von der Matrix abziehbare Klebstoffkonstruktion, umfassend ein Coextrudat, umfassend (A) eine kontinuierliche Polymerfolie mit einer oberen Oberfläche und einer unteren Oberfläche und einer Dicke von etwa 0,1 mil bis zu etwa 1 mil, und (B) eine Klebeschicht mit einer oberen und unteren Oberfläche, wobei die obere Oberfläche der Klebeschicht klebend mit der unteren Oberfläche des Polymerfilms verbunden ist.

Die DE 2007 034474 A1 betrifft ein Verfahren zum Fügen zweier Metallteile mittels Schweißens, insbesondere Punktschweißens, indem die beiden zu verschweißenden Metallteile in Kontakt gebracht werden und an der Kontaktstelle miteinander verschweißt werden, wobei in der Nähe des Schweißorts befindliche Metalloberflächen, die gegebenenfalls einem Schweißfunken- oder Schweißperlenflug ausgesetzt sind, durch ein Klebeband insbesondere gegen die Schweißfunken- oder Schweißperlen maskiert werden, wobei das Klebeband einen Träger und eine einseitig darauf aufgebrachte Klebmasse aufweist, wobei der Träger aus einem folienförmigen polymeren Material besteht und die Klebmasse chemisch auf Natur- oder Synthesekautschuk basiert und wobei das Klebeband eine Zugkraft bei 1% Dehnung von kleiner als 3 N/cm aufweist und die Gesamtdicke mindestens 40 μm beträgt.

Die WO 02/072162 A2 betrifft ein Verfahren zum Entfernen eines medizinischen Artikels von der Haut, wobei das Verfahren umfasst: Bereitstellen eines an der Haut haftenden medizinischen Artikels, wobei der medizinische Artikel eine Unterlage und eine darauf angeordnete dehnbare entfernbare Haftkleberschicht umfasst; und Dehnen des medizinischen Artikels in einer ausreichenden Menge, um die Klebeschicht von der Unterlage abzulösen und den medizinischen Artikel von der Haut zu entfernen.

Aufgabe der Erfindung ist es, einen durch Dehnung in Richtung der Verklebungsebene wiederablösbaren Klebestreifen zu finden mit einer Klebmasse auf Basis von Vinylaromatenblockcopolymeren und einem Träger, der hoch dehnbar und zum großen Teil elastisch ist und in welchen keine der in der Klebeschicht eingesetzten Harze aus der Klebeschicht hinein wandern.

Die Aufgabe wird mit einem gattungsgemäßen Haftklebfolienstreifen erfindungsgemäß gelöst, wie er im Hauptanspruch niedergelegt ist. Gegenstand der Unteransprüche sind dabei vorteilhafte Weiterbildungen des Haftklebfolienstreifens.

Demgemäß betrifft die Erfindung einen Haftklebfolienstreifen aus drei Schichten, der sich durch dehnendes Verstrecken im Wesentlichen in der Verklebungsebene rückstands- und zerstörungsfrei wieder ablösen lässt, bestehend aus einem einschichtigen Träger aus Polyurethan, der beidseitig mit jeweils einer Klebemassenschicht ausgerüstet ist, wobei

- beide Klebemassenschichten außenliegende Klebemasseschichten sind, die aus einer Klebmasse bestehen, die auf Basis von Vinylaromatenblockcopolymeren und Klebharzen aufgebaut ist, wobei zu mindestens 75 % (bezogen auf den Gesamtharzanteil) ein Harz gewählt wird mit einem DACP (diacetone alcohol cloud point) von größer -20 °C, bevorzugt größer 0 °C, wobei der DACP jeweils durch Abkühlen einer erhitzten Lösung von 5 g Harz, 5 g Xylol und 5 g Diacetonalkohol bis zu dem Punkt bestimmt wird, bei dem die Lösung trübe wird, und wobei es sich bei den Klebharzen zu mindestens 75 Gew.-% um Kohlenwasserstoffharze oder Terpenharze oder eine Mischung dergleichen handelt, und
- der Träger eine Reißdehnung von mindestens 100 %, wobei die Reißdehnung bei einem Prüfklime von 23 °C und 50 % relativer Luftfeuchtigkeit in Anlehnung an DIN 53504 unter Verwendung von Schulterstäben der Größe S3 bei einer Separationsgeschwindigkeit von 300 mm pro Minute gemessen wird, und ein Rückstellvermögen von über 50 % aufweist, wie im Prüfmethodenteil der Beschreibung bestimmt.

Vorzugsweise weisen die erste und die zweite Klebemassenschicht eine identische Zusammensetzung auf.

Besonders vorteilhaft ist ein Klebfolienstreifen bestehend aus

- einem einschichtigen Träger aus einem Polyurethan, wobei der Träger eine Reißdehnung von mindestens 100 % und ein Rückstellvermögen von über 50 % aufweist, wobei
- auf den Träger beidseitig jeweils eine Klebemassenschicht aus einer Klebmasse aufgebracht ist, die auf Basis von Vinylaromatenblockcopolymeren und Klebharzen aufgebaut ist, wobei die Zusammensetzung der Klebemassen identisch ist.

Damit einschlägig bekannte strippfähige Klebfolienstreifen leicht und rückstandsfrei wieder abgelöst werden können, müssen sie bestimmte klebtechnische Eigenschaften besitzen: Beim Verstrecken muss die Klebrigkeit der Klebfolienstreifen deutlich sinken. Je niedriger die Klebleistung im verstreckten Zustand ist, umso weniger stark wird der Untergrund beim Ablösen beschädigt.

Besonders deutlich ist diese Eigenschaft bei Klebemassen auf Basis von Vinylaromatenblockcopolymeren zu erkennen, bei denen in der Nähe der Streckgrenze die Klebrigkeit auf unter 10 % sinkt.

Damit strippfähige Klebebänder leicht und rückstandsfrei wieder abgelöst werden können, müssen sie neben den oben beschriebenen klebtechnischen auch einige bestimmte mechanische Eigenschaften besitzen.

Besonders vorteilhaft ist das Verhältnis der Reißkraft und der Strippkraft größer als zwei, bevorzugt größer als drei.

Dabei ist die Strippkraft diejenige Kraft, die aufgewendet werden muss, um einen Klebestreifen aus einer Klebfuge durch paralleles Ziehen in Richtung der Verklebungsebene wieder zu lösen. Diese Strippkraft setzt sich aus der Kraft, die wie oben beschrieben für das Ablösen des Klebebandes von den Verklebungsuntergründen nötig ist, und der Kraft, die zur Verformung des Klebebandes aufgewendet werden muss, zusammen. Die zur Verformung des Klebebandes erforderliche Kraft ist abhängig von der Dicke des Klebfolienstreifens.

Die zum Ablösen benötigte Kraft ist dagegen in dem betrachteten Dickenbereich des Klebfolienstreifens (50 $\mu$m bis 800 $\mu$m) unabhängig von der Dicke der Klebestreifen.

Die Zugfähigkeit steigt hingegen proportional zur Dicke der Klebestreifen an. Hieraus folgt, dass für Selbstklebebänder mit einem Einschichtaufbau, wie sie in der DE 33 31 016 C2 offenbart sind, die Zugfestigkeit unterhalb einer bestimmten Dicke kleiner ist als die Abzugskraft. Oberhalb einer bestimmten Dicke hingegen ist das Verhältnis von Abzugskraft zur Strippkraft größer als zwei.

Als Haftklebemassen finden bevorzugt solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus beidem Anwendung. Dabei können die Produkte auch teilweise oder vollständig im Dien-Block hydriert sein. Blockcopolymere von Vinylaromaten und Isobutylen sind ebenfalls erfindungsgemäß nutzbar.

Vorzugsweise besitzen die Blockcopolymere der Haftklebmassen Polystyrolendblöcke.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Sämtliche der vorgenannten Polymere können alleine oder im Gemisch miteinander genutzt werden.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C insbesondere mindestens 50 °C und für B-Blöcke höchstens 25 °C insbesondere höchstens -25 °C) wider.

In einer vorteilhaften Ausführungsform weisen die Blockcopolymere einen Polyvinylaromatenanteil von 10 Gew.-% bis 35 Gew.-% auf bevorzugt zwischen 20 Gew.-% und 32 Gew.-%.

In einer weiteren bevorzugten Ausgestaltung beträgt der Anteil der Vinylaromatblockcopolymere, insbesondere Styrolblockcopolymere in Summe bezogen auf die gesamte Haftklebmasse mindestens 20 Gew.-%, vorzugsweise mindestens 30 Gew.-%, weiter bevorzugt mindestens 35 Gew.-%.

Ein zu geringer Anteil an Vinylaromatenblockcopolymeren hat zur Folge, dass die Kohäsion der Haftklebemasse relativ niedrig ist.

Der maximale Anteil der Vinylaromatblockcopolymere, insbesondere Styrolblockcopolymere in Summe bezogen auf die gesamte Haftklebmasse beträgt maximal 80 Gew.-%, bevorzugt maximal 65 Gew.-%, ganz besonders bevorzugt maximal 60 Gew.-%.

Ein zu hoher Anteil an Vinylaromatenblockcopolymere hat wiederum zur Folge, dass die Haftklebemasse kaum noch haftklebrig ist.

Blockcopolymere mit weichen und harten Blöcken, deren Glasübergangstemperaturen deutlich divergieren, bilden in der Regel bei Raumtemperatur eine Domänenstruktur. Diese wird für Kohäsionserzeugung durch physikalische Vernetzung der Klebemasse genutzt. Die unmodifizierten Blockcopolymere von Styrol-Blöcken und Dien/Butylen/Isobutylen/Ethylen/Propylen-Blöcken sind meist nur bis 85 oder bis 100 °C scherstabil, in diesem Temperaturbereich beginnen je nach Zusammensetzung die Hartblöcke zu erweichen.

Erfindungsgemäße Haftklebmassen basieren auf ausgewählten Styrolblockcopolymeren. Die Haftklebrigkeit der Polymerengemische wird durch Zugabe von mit der Elastomerphase mischbaren Klebharzen erreicht. Als weitere Abmischkomponenten können u. a. Alterungsschutzmittel, Verarbeitungshilfsmittel, Farbstoffe, optische Aufheller, Stabilisatoren, Endblockverstärkerharze sowie gegebenenfalls weitere Polymere, welche bevorzugt elastomerer Natur sind, genutzt werden.

Die Art und Menge der Abmischkomponenten kann bedarfsweise ausgewählt werden.

Die Haftklebemassen weisen neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein. Bei erfindungsgemäßen Produktaufbauten umfassend zumindest zwei, insbesondere drei Schichten, von denen zumindest eine eine Trägerschicht und zumindest eine eine Klebeschicht ist, ist, wie bereits einleitend ausgeführt, darauf zu achten, dass Klebharze aus der/den Klebeschichten im Wesentlichen nicht in die Trägerschicht migrieren. Die vorliegende Erfindung macht sich im Gegensatz zum Stand der Technik (Einführung von Sperrschichten oder gezielter Einbau der gleichen Harze in Klebeschicht(en) und Trägerschicht) die Idee zunutze, dass in der Klebeschicht/den Klebeschichten hauptsächlich Klebharze eingesetzt werden, die nicht mit der Trägerschicht kompatibel sind und daher nicht die Tendenz zur Migration in die Trägerschicht aufweisen. Entsprechend dieses erfinderischen Konzepts wird zu mindestens 75 % (bezogen auf den Gesamtharzanteil) ein Harz gewählt mit einem DACP (diacetone alcohol cloud point) von größer -20 °C, bevorzugt größer 0 °C, um eine Wanderung der Harze in die polare Trägerschicht, nämlich die erfindungsgemäße PU-Trägerschicht zu vermeiden.

Es handelt sich bei den Klebharzen zu mindestens 75 Gew.-% (bezogen auf den Gesamtharzanteil) um Kohlenwasserstoffharze oder Terpenharze oder eine Mischung dergleichen.

Es wurde gefunden, dass als Klebrigmacher für die Haftklebemasse(n) insbesondere unpolare Kohlenwasserstoffharze zum Beispiel hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder Cg-Monomerströmen, Polyterpenharze auf Basis von $\alpha$-Pinen und/oder $\beta$-Pinen und/oder $\delta$-Limonen vorteilhaft eingesetzt werden können. Vorgenannte Klebharze können sowohl allein als auch im Gemisch eingesetzt werden. Dabei können sowohl bei Raumtemperatur feste als auch flüssige Harze zum Einsatz kommen. Kolophoniumharze, hydriert oder nicht hydriert sind bis zu einem maximalen Anteil von 25 % bezogen auf die Gesamtmasse der Harze in der Klebmasse vorhanden, damit die Klebmassen nicht zu polar werden.

Als weitere Additive können typischerweise genutzt werden:

- Plastifizierungsmittel wie zum Beispiel Weichmacheröle, oder niedermolekulare flüssige Polymere, wie zum Beispiel niedermolekulare Polybutene
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine Verarbeitungshilfsmittel
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

In einer Ausführungsform der vorliegenden Erfindung enthält die Haftklebemasse auch Füllstoffe, beispielhaft, aber nicht einschränkend erwähnt seien Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebmassen können auch mit Farbstoffen oder Pigmenten eingefärbt sein. Die Klebemassen können weiß, schwarz oder farbig sein.

Die Trägerschicht besteht aus Polyurethanen, die durch ihre Monomerzusammensetzung hoch flexibel und dehnbar eingestellt sind. Es können sowohl Polyesterurethane als auch Polyetherurethane zum Einsatz kommen. Dabei müssen die Träger eine Reißdehnung von mindestens 100 % aufweisen und ein Rückstellvermögen von mindestens 50 %, das heißt, dass der elastische Anteil des Trägermaterials größer ist als der plastische Anteil.

Die Dicke der Trägerschicht liegt dabei im Bereich von 10 bis 200 $\mu$m, bevorzugt zwischen 20 und 100 $\mu$m.

Die Spannung bei 50 % Dehnung sollte kleiner als 20 N/cm sein, bevorzugt kleiner als 10 N/cm, um ein einfaches Ablösen ohne allzu großen Kraftaufwand zu ermöglichen.

Zur besseren Verankerung der Haftklebmassen auf dem Träger können die Träger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Herstellung und Verarbeitung der Haftklebemassen kann sowohl aus der Lösung als auch aus der Schmelze erfolgen. Das Aufbringen der Haftklebmassen auf die Trägerschicht kann durch direkte Beschichtung oder durch Laminierung, insbesondere Heißlaminierung erfolgen.

Typische Konfektionierformen der erfindungsgemäßen Haftklebestreifen sind Klebebandrollen sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

Optional kann ein nicht haftklebriger Anfasserbereich vorgesehen sein, von welchem aus der Ablöseprozess ausgeführt werden kann.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Der Klebfolienstreifen weist vorzugsweise eine Dicke auf von 50 $\mu$m bis 800 $\mu$m, weiter vorzugsweise von 100 $\mu$m bis 600 $\mu$m.

Die erste und/oder zweite Klebemassenschicht weist vorzugsweise eine Dicke auf von 20 $\mu$m bis 300 $\mu$m, weiter vorzugsweise von 30 $\mu$m bis 150 $\mu$m.

Bevorzugt ist eine Ausführungsform des Haftklebfolienstreifens, bei dem der Träger eine Dicke zwischen 40 und 60 $\mu$m, vorzugsweise 50 $\mu$m aufweist und die identischen Klebemassenschichten ebenfalls jeweils eine Dicke zwischen 40 und 60 $\mu$m, vorzugsweise 50 $\mu$m.

Anhand der nachfolgend beschriebenen Figuren sowie Beispielen werden besonders vorteilhafte Ausführungen der Erfindung näher erläutert, ohne damit die Erfindung unnötig einschränken zu wollen.

Es zeigen

Figur 1     einen erfindungsgemäßen dreischichtigen haftklebrigen Klebestreifen,

Figur 2     einen erfindungsgemäßen dreischichtigen haftklebrigen Klebestreifen in einer alternativen Ausführungsform.

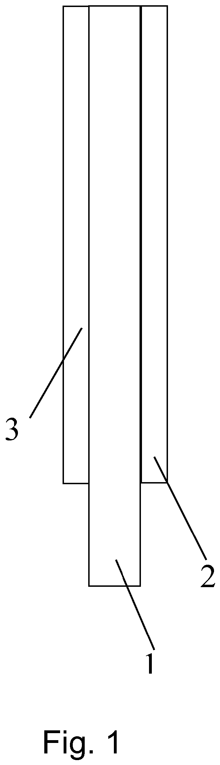

In der Figur 1 ist der erfindungsgemäße Haftklebfolienstreifen aus drei Schichten 1, 2, 3 gezeigt, der sich durch dehnendes Verstrecken im Wesentlichen in der Verklebungsebene rückstands- und zerstörungsfrei wieder ablösen lässt.

Der Streifen besteht aus einem Träger 1, wobei der Träger 1 einschichtig ausgeführt ist und wobei die Trägerschicht aus einem Polyurethan besteht mit einer Reißdehnung von mindestens 100 % und einem Rückstellvermögen von über 50 %.

Auf dem Träger sind beidseitig außenliegende Klebemassenschichten 2, 3 vorhanden.

Das überstehende Ende der Trägerschicht 1 kann als Anfasser dienen, ist aber nicht zwingend vorhanden.

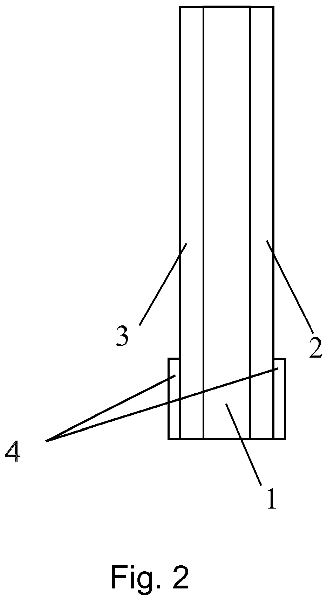

In der Figur 2 ist der erfindungsgemäße haftklebrige Klebestreifen in einer Variante gezeigt, Der Haftklebestreifen besteht aus drei Schichten 1, 2, 3, die kongruent übereiander angeordnet sind.

Um einen Anfasser zu erzeugen, an dem gezogen wird, um das dehnende Verstrecken insbesondere in der Verklebungsebene zu erzielen, ist das eine Ende des Klebefolienstreifens auf beiden Seiten durch das Aufbringen von bevorzugt silikonisierten Folien- oder Papierstücken 6 nicht haftklebrig ausgerüstet.

Nachfolgend wird die Erfindung durch einige Beispiele näher erläutert.

Die Bestandteile der Haftklebemassen wurden hierbei 40%ig in Toluol gelöst und mit einem Streichbalken auf eine PET-Folie ausgerüstet mit einem trennenden Silikon ausgestrichen, so dass sie nach einer Trocknung bei 110 °C für 15 min eine Schichtdicke von 50 $\mu$m aufwiesen.

Anschließend wurden auf jede Seite der Trägerschicht die Klebmasse laminiert bei Raumtemperatur mit einer Gummirolle.

Durch Ausstanzen wurden Haftklebestreifen der gewünschten Abmessungen erhalten.

**Beispiele**

**Vergleichsbeispiel 1:**

Einschichtiger Aufbau (150 $\mu$m Dicke):

|  |  |
|---|---|
| 50 Teile | Kraton D 1102 |
| 45 Teile | Piccolyte A 115 |
| 5 Teile | Wingtack 10 |

**Beispiel 2:**

Mehrschichtaufbau:

Trägerschicht

| | |
|---|---|
| 50 μm | Platilon 4100D |

Äußere Schichten (je 50 μm):

| | |
|---|---|
| 50 Teile | Kraton D 1102 |
| 45 Teile | Piccolyte A 115 |
| 5 Teile | Wingtack 10 |

**Vergleichsbeispiel 3:**

Einschichtiger Aufbau (150 μm Dicke):

| | |
|---|---|
| 25 Teile | Vector 4111 |
| 25 Teile | Vector 4113 |
| 45 Teile | Escorez 1310 |
| 5 Teile | Ondina G 17 |

**Beispiel 4:**

Mehrschichtaufbau:

Trägerschicht

| | |
|---|---|
| 50 μm | Platilon U073 |

Äußere Schichten (je 50 μm):

| | |
|---|---|
| 25 Teile | Vector 4111 |
| 25 Teile | Vector 4113 |
| 45 Teile | Escorez 1310 |
| 5 Teile | Ondina G 17 |

Eigenschaften der eingesetzten Rohstoffe:

Trägerschichten:

- Platilon 4100D    Polyesterurethanfolie der Firma Epurex films mit einer Reißdehnung von 450 % und einer Spannung bei 50 % Dehnung von 4 bis 5 N/cm
- Platilon U073    Polyetherurethanfolie der Firma Epurex films mit einer Reißdehnung von 650 % und einer Spannung bei 50 % Dehnung von 3 bis 4 N/cm

Bestandteile der Klebmasse:

- Kraton D 1102    Styrol-Butadien-Styrol-Blockcopolymer der Firma Kraton Polymers, 83 Gew.-% 3-Block, 17 Gew.-% 2-Block; Blockpolystyrolgehalt: 30 Gew.-%
- Vector 4111    Styrol-Isopren-Styrol-Blockcopolymer der Firma Dexco, 100 Gew.-% 3-Block; Blockpolystyrolgehalt: 18 Gew.-%
- Vector 4113    Styrol-Isopren-Styrol-Blockcopolymer der Firma Dexco, 82 Gew.-% 3-Block, 18 Gew.-% 2-Block; Blockpolystyrolgehalt: 15 Gew.-%
- Piccolyte A 115    α-Pinenharz der Firma Pinova mit einem Erweichungspunkt nach der Ring & Kugel-Methode von 115 °C
- Wingtack 10    Flüssiges Kohlenwasserstoffharz der Firma Cray Valley

(fortgesetzt)

- Escorez 1310     nicht hydriertes Kohlenwasserstoffharz der Firma Exxon mit einem Erweichungspunkt nach der Ring & Kugel-Methode von 94 °C
- Ondina G17     medizinisches Weißöl der Firma Shell

Bei den beispielhaften Haftklebestreifen wurden die folgenden mechanischen und klebtechnischen Daten ermittelt:

| Haftklebemasse Beispiel Nr. | Zugfestigkeit in N/cm | Stripp-Spannung in N/cm | Anzahl Reißer im Reißertest | Rückstellvermögen in % |
|---|---|---|---|---|
| 1* | 18 | 4 | 6 | 99 |
| 2 | 35 | 6 | 0 | 85 |
| 3* | 12 | 3 | 17 | 97 |
| 4 | 29 | 6 | 1 | 81 |

*Vergleichsbeispiel

Die Vergleichsbeispiele 1 und 3 zeigen, dass mit einem Einschichtaufbau die Anzahl der Reißer beim Strippen in einem Winkel von 30° höher liegt als bei einem Klebestreifen mit einer reißfesten Trägerschicht.

Trotzdem lassen sich die Klebestreifen mit relativ geringer Kraft wieder ablösen. Es kommt auch nicht zu einem Spalten des Verbundes, die Haftklebmassen kleben auch nach dem Ablösen noch an der Trägerschicht.

Die beiden Muster mit Trägerschicht zeigten auch nach 3 Monaten Lagerung bei 40 °C keine geringere Anfassklebrigkeit, die Zugfestigkeiten waren ebenfalls unverändert. Das deutet darauf hin, dass die Klebharze nicht aus der Klebmasse in die Trägerschicht gewandert sind.

Prüfmethoden

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

*Rückstellvermögen beziehungsweise Elastizität:*

Zur Messung des Rückstellvermögens wurden die Haftklebestreifen um 100 % gedehnt, in dieser Dehnung für 30 s gehalten und dann entspannt. Nach einer Wartezeit von 1 min wurde erneut die Länge gemessen.

Das Rückstellvermögen berechnet sich nun wie folgt:

$$RV = ((L_{100} - L_{end}) / L_0)*100$$

mit RV = Rückstellvermögen in %

$L_{100}$ : Länge des Klebestreifens nach der Dehnung um 100 %

$L_0$ : Länge des Klebestreifens vor der Dehnung

$L_{end}$ : Länge des Klebestreifens nach der Relaxation von 1 min.

Das Rückstellvermögen entspricht dabei der Elastizität.

Reißdehnung, Zugfestigkeit und Spannung bei 50 % Dehnung

Die Reißdehnung, die Zugfestigkeit und die Spannung bei 50 % Dehnung wurden in Anlehnung an DIN 53504 unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

*Ablösekraft*

Die Ablösekraft (Strippkraft beziehungsweise Stripspannung) wurde mit Hilfe einer Klebstofffolie mit den Abmessungen 50 mm Länge x 20 mm Breite mit einem am oberen Ende nicht haftklebrigem Anfasserbereich ermittelt. Die Klebstofffolie wurde zwischen zwei deckungsgleich zueinander angeordneten Stahlplatten mit einer Abmessung von 50 mm x 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden für eine Dauer von 24 Stunden bei +40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm$^2$), gemessen in dem Bereich, in welchem der Klebestreifen auf einer Verklebungslänge zwischen 10 mm und 40 mm von den Stahluntergründen abgelöst ist.

*Reißeranfälligkeit*

Um die Reißeranfälligkeit zu testen, wurden jeweils 20 Klebestreifen der Abmessungen 20 mm x 50 mm, versehen mit einem Anfasser wie bei der Messungen der Stripspannung beschrieben, auf eine Glasplatte verklebt. Anschließend wurde den Anfasser aus der Klebfuge herausstehen lassend eine Polystyrolplatte der Abmessungen 40 mm x 40 mm auf den Klebestreifen geklebt und mit einer Kraft von 100 N angedrückt. Nach einer Aufziehzeit von 10 Tagen bei 40 °C wurden die Klebestreifen durch Ziehen gelöst, wobei in einem Winkel von 30° gezogen wurde. Notiert wurde die Anzahl der abgerissenen Klebestreifen.

*Klebharzerweichungstemperatur*

Die Klebharzerweichungstemperatur wird nach der einschlägigen Methodik ermittelt, die als Ring & Ball bekannt ist und nach ASTM E28 standardisiert ist.

*DACP*

Der DACP ist der Diaceton-Trübungspunkt und wird durch Abkühlen einer erhitzten Lösung von 5 g Harz, 5 g Xylol und 5 g Diacetonalkohol bis zu dem Punkt bestimmt, bei welchem die Lösung trübe wird.

**Patentansprüche**

1. Haftklebfolienstreifen aus drei Schichten, der sich durch dehnendes Verstrecken im Wesentlichen in der Verklebungsebene rückstands- und zerstörungsfrei wieder ablösen lässt, bestehend aus einem einschichtigen Träger aus Polyurethan, der beidseitig mit jeweils einer Klebemassenschicht ausgerüstet ist, wobei

    • beide Klebemasseschichten außenliegende Klebemassenschichten sind, die aus einer Klebmasse bestehen, die auf Basis von Vinylaromatenblockcopolymeren und Klebharzen aufgebaut ist, wobei zu mindestens 75 % (bezogen auf den Gesamtharzanteil) ein Harz gewählt wird mit einem DACP (diacetone alcohol cloud point) von größer -20 °C, bevorzugt größer 0 °C, wobei der DACP jeweils durch Abkühlen einer erhitzten Lösung von 5 g Harz, 5 g Xylol und 5 g Diacetonalkohol bis zu dem Punkt bestimmt wird, bei welchem die Lösung trübe wird, und wobei es sich bei den Klebharzen zu mindestens 75 Gew.-% um Kohlenwasserstoffharze oder Terpenharze oder eine Mischung dergleichen handelt, und
    • der Träger eine Reißdehnung von mindestens 100 %, wobei die Reißdehnung bei einem Prüfklima von 23 °C und 50 % relativer Luftfeuchtigkeit in Anlehnung an DIN 53504 unter Verwendung von Schulterstäben der Größe S3 bei einer Separationsgeschwindigkeit von 300 mm pro Minute gemessen wird, und ein Rückstellvermögen von über 50 % aufweist, wie im Prüfmethodenteil der Beschreibung bestimmt.

2. Haftklebfolienstreifen nach Anspruch 1,
    **dadurch gekennzeichnet, dass**
    die erste und die zweite Klebemassenschicht eine identische Zusammensetzung aufweisen.

3. Haftklebfolienstreifen nach zumindest einem der vorhergehenden Ansprüche,

**dadurch gekennzeichnet, dass**
als Haftklebemassen solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus beidem eingesetzt werden.

**4.** Haftklebfolienstreifen nach zumindest einem der vorhergehenden Ansprüche,
**dadurch gekennzeichnet, dass**
die Blockcopolymere der Haftklebmassen einen Polyvinylaromatenanteil von 10 Gew.-% bis 35 Gew.-%, bevorzugt zwischen 20 Gew.-% und 32 Gew.-%, aufweisen.

**5.** Haftklebfolienstreifen nach zumindest einem der vorhergehenden Ansprüche,
**dadurch gekennzeichnet, dass**
die Blockcopolymere der Haftklebmassen Polystyrolendblöcke besitzen.

**6.** Haftklebfolienstreifen nach zumindest einem der vorhergehenden Ansprüche,
**dadurch gekennzeichnet, dass**
der Anteil an Vinylaromatenblockcopolymer, insbesondere Styrolblockcopolymer bezogen auf die gesamte Haftklebmasse zwischen 20 und 70 Gew.-%, bevorzugt zwischen 30 und 65 Gew.-%, ganz besonders bevorzugt zwischen 35 und 60 Gew.-% liegt.

**7.** Haftklebfolienstreifen nach zumindest einem der vorhergehenden Ansprüche,
**dadurch gekennzeichnet, dass**
es sich bei dem Polyurethan der Trägerschicht um ein Polyetherurethan oder ein Polyesterurethan handelt.

**8.** Haftklebfolienstreifen nach zumindest einem der vorhergehenden Ansprüche,
**dadurch gekennzeichnet, dass**
die Trägerschicht 10 bis 200 $\mu$m, bevorzugt 20 bis 100 $\mu$m dick ist.


**Claims**

**1.** Pressure-sensitive adhesive film strip comprising three layers, which can be detached again without residue and without destruction by extensive stretching substantially in the bond plane, consisting of a single-layer polyurethane carrier furnished on both sides with a respective layer of adhesive, where

   • both layers of adhesive are outer layers of adhesive, consisting of an adhesive which is based on vinyl aromatic block copolymers and tackifier resins, wherein at least 75% (based on the total resin fraction) of the resin is a resin having a DACP (Diacetone Alcohol Cloud Point) of greater than -20°C, preferably greater than 0°C, the DACP being determined in each case by cooling a heated solution of 5 g of resin, 5 g of xylene and 5 g of diacetone alcohol to the point at which the solution becomes cloudy, and wherein the tackifier resins comprise at least 75 wt% of hydrocarbon resins or terpene resins or a mixture of the like, and
   • the carrier has an elongation at break of at least 100%, the elongation at break being measured under test conditions of 23°C and 50% relative humidity in accordance with DIN 53504 using dumbbell specimens of size S3 with a separation velocity of 300 mm per minute, and has a resilience of over 50%, as determined in the Test Methods part of the description.

**2.** Pressure-sensitive adhesive film strip according to Claim 1,
**characterized in that**
the first and second layers of adhesive are identical in their composition.

**3.** Pressure-sensitive adhesive film strip according to at least one of the preceding claims,
**characterized in that**
pressure-sensitive adhesives used comprise those based on block copolymers comprising polymer blocks formed predominantly of vinyl aromatic compounds (A blocks), preferably styrene, and those formed predominantly by polymerization of 1,3-dienes (B blocks) such as, for example, butadiene and isoprene or a copolymer of the two.

**4.** Pressure-sensitive adhesive film strip according to at least one of the preceding claims,
**characterized in that**

the block copolymers of the pressure-sensitive adhesives have a polyvinyl aromatic compounds fraction of 10 wt% to 35 wt%, preferably between 20 wt% and 32 wt%.

5. Pressure-sensitive adhesive film strip according to at least one of the preceding claims,
**characterized in that**
the block copolymers of the pressure-sensitive adhesives possess polystyrene end blocks.

6. Pressure-sensitive adhesive film strip according to at least one of the preceding claims,
**characterized in that**
the fraction of vinyl aromatic block copolymer, more particularly styrene block copolymer, based on the total pressure-sensitive adhesive, is between 20 and 70 wt%, preferably between 30 and 65 wt%, especially preferably between 35 and 60 wt%.

7. Pressure-sensitive adhesive film strip according to at least one of the preceding claims,
**characterized in that**
the polyurethane of the carrier layer is a polyetherurethane or a polyesterurethane.

8. Pressure-sensitive adhesive film strip according to at least one of the preceding claims,
**characterized in that**
the carrier layer is 10 to 200 μm, preferably 20 to 100 μm, thick.


## Revendications

1. Bande de feuille autoadhésive composée de trois couches, qui se laisse redétacher sans résidu et sans destruction par étirage d'extension essentiellement dans le plan du collage, constituée d'un support monocouche de polyuréthane, qui est pourvu sur les deux côtés à chaque fois d'une couche de masse adhésive,

   • les deux couches de masse adhésive étant des couches de masse adhésive se situant à l'extérieur qui sont constituées d'une masse adhésive qui est construite à base de copolymères à blocs vinylaromatiques et de résines adhésives, au moins 75 % (par rapport à la proportion totale de résine) étant une résine choisie comportant un DACP (point de trouble de diacétone alcool - diacetone alcohol cloud point) supérieur à -20 °C, préférablement supérieur à 0 °C, le DACP étant déterminé à chaque fois par refroidissement d'une solution chauffée de 5 g de résine, 5 g de xylène et 5 g de diacétone alcool jusqu'au point où la solution devient trouble, et au moins 75 % en poids des résines adhésives étant des résines d'hydrocarbure ou des résines de terpène ou un mélange de celle-ci, et
   • le support présentant une élongation à la rupture d'au moins 100 %, l'élongation à la rupture étant mesurée dans des conditions d'essai de 23 °C et 50 % d'humidité relative de l'air conformément à la norme DIN 53504 en utilisant des bâtons d'épaule de grosseur S3 à une vitesse de séparation de 300 mm par minute, et une reprise élastique supérieure à 50 %, comme déterminée dans la partie de méthodes d'essai de la description.

2. Bande de feuille autoadhésive selon la revendication 1, **caractérisée en ce que** la première couche de masse adhésive et la deuxième couche de masse adhésive présentent une composition identique.

3. Bande de feuille autoadhésive selon au moins l'une des revendications précédentes, **caractérisée en ce qu'**en tant que masses autoadhésives, celles à base de copolymères à blocs contenant des blocs de polymère majoritairement formés de composés vinylaromatiques (blocs A), préférablement de styrène, et celles formées majoritairement par polymérisation de 1,3-diènes (blocs B) comme par exemple le butadiène et l'isoprène ou d'un copolymère de ces deux-ci, sont utilisées.

4. Bande de feuille autoadhésive selon au moins l'une des revendications précédentes, **caractérisée en ce que** les copolymères à blocs des masses autoadhésives présentent une proportion de poly(composé vinylaromatique) de 10 % en poids à 35 % en poids, préférablement entre 20 % en poids et 32 % en poids.

5. Bande de feuille autoadhésive selon au moins l'une des revendications précédentes, **caractérisée en ce que** les copolymères à blocs des masses autoadhésives possèdent des blocs terminaux de polystyrène.

6. Bande de feuille autoadhésive selon au moins l'une des revendications précédentes, **caractérisée en ce que** la proportion de copolymères à blocs vinylaromatiques, en particulier de copolymères à blocs de styrène, par rapport à la masse autoadhésive totale, se situe entre 20 et 70 % en poids, préférablement entre 30 et 65 % en poids, tout particulièrement préférablement entre 35 et 60 % en poids.

7. Bande de feuille autoadhésive selon au moins l'une des revendications précédentes, **caractérisée en ce que** le polyuréthane de la couche de support est un polyétheruréthane ou un polyesteruréthane.

8. Bande de feuille autoadhésive selon au moins l'une des revendications précédentes, **caractérisée en ce que** la couche de support est d'une épaisseur de 10 à 200 $\mu$m, préférablement de 20 à 100 $\mu$m.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4024312 A
- DE 3331016 C2
- WO 9211332 A1
- WO 9211333 A1
- DE 4222849 C1
- WO 9506691 A1
- DE 19531696 A1
- DE 19626870 A1
- DE 19649727 A1
- DE 19649728 A1
- DE 19649729 A1
- DE 19708364 A1
- DE 19720145 A1
- DE 19820858 A1
- WO 9937729 A1
- DE 10003318 A1
- DE 4233872 C1
- DE 19511288 C1
- US 5507464 B1
- US 5672402 B1
- WO 9421157 A1
- DE 4428587 C1
- DE 4431914 C1
- WO 9707172 A1
- DE 19627400 A1
- WO 9803601 A1
- DE 19649636 A1
- DE 19720526 A1
- DE 19723177 A1
- DE 19723198 A1
- DE 19726375 A1
- DE 19756084 C1
- DE 19756816 A1
- DE 19842864 A1
- DE 19842865 A1
- WO 9931193 A1
- WO 9963018 A1
- WO 0012644 A1
- DE 19938693 A1
- DE 19708366 A1
- DE 2728346 A1
- WO 2010141248 A1
- WO 0013888 A1
- DE 2007034474 A1
- WO 02072162 A2